(19) Europäisches Patentamt
European Patent Office
Office européen des brevets

(11) **EP 1 645 020 B1**

(12) **EUROPÄISCHE PATENTSCHRIFT**

(45) Veröffentlichungstag und Bekanntmachung des Hinweises auf die Patenterteilung:
**28.02.2007 Patentblatt 2007/09**

(21) Anmeldenummer: **04731157.6**

(22) Anmeldetag: **05.05.2004**

(51) Int Cl.:
***H02H 6/00*** *(2006.01)*

(86) Internationale Anmeldenummer:
**PCT/EP2004/004783**

(87) Internationale Veröffentlichungsnummer:
**WO 2005/008857 (27.01.2005 Gazette 2005/04)**

(54) **VORRICHTUNG UND VERFAHREN ZUM SCHUTZ EINER ELEKTRISCHEN MASCHINE**

DEVICE AND METHOD FOR PROTECTING AN ELECTRIC MACHINE

DISPOSITIF ET PROCEDE DESTINES A LA PROTECTION D'UNE MACHINE ELECTRIQUE

(84) Benannte Vertragsstaaten:
**DE DK FR SE**

(30) Priorität: **11.07.2003 EP 03015895**

(43) Veröffentlichungstag der Anmeldung:
**12.04.2006 Patentblatt 2006/15**

(73) Patentinhaber: **SIEMENS AKTIENGESELLSCHAFT**
**80333 München (DE)**

(72) Erfinder:
• **FRITSCH, Andreas**
**92245 Kümmersbruck (DE)**
• **HEBERLEIN, Thomas**
**90537 Feucht (DE)**
• **PRÖLSS, Manfred**
**92263 Ebermannsdorf (DE)**

(56) Entgegenhaltungen:
**EP-A- 0 999 629 GB-A- 2 151 862**
**US-A- 4 467 260 US-B1- 6 424 266**

EP 1 645 020 B1

**Beschreibung**

Die vorliegende Erfindung betrifft eine Schutzvorrichtung für eine elektrische Maschine gegen Stromüberlastung. Darüber hinaus betrifft die vorliegende Erfindung ein entsprechendes Verfahren zum Schutz einer elektrischen Maschine.

Elektrische Maschinen, insbesondere Motoren, können zeitweise mit einem Strom betrieben werden, dessen Stärke oberhalb der Nenn- beziehungsweise Dauerstromstärke liegt. Der Grund hierfür ist, dass die Überhitzung der elektrischen Maschine erst nach einer gewissen Zeit eintritt. Die elektrischen Maschinen sind daher in gewisse τ-Klassen (CLASS oder Abschaltklasse) eingeteilt. Hierin ist jeweils das zugelassene Mehrfache des Nennstroms und die Zeitdauer, mit der die elektrische Maschine mit diesem erhöhten Strom betrieben werden kann, ohne dass eine Überhitzung eintritt, definiert.

Bislang werden für den Motorschutz typischerweise mechanische Überlastrelais verwendet. Diese sind durch einen Bimetallstreifen in der Lage, den Energiezufluss bei Überschreitung eines Grenzstroms zu unterbrechen, wobei die Zeit bis zur Unterbrechung eine Funktion des Stroms ist. Das hierfür verwendete Bimetall wird in elektronischen Überlastgeräten seit geraumer Zeit mittels Software/Firmware in seinen thermischen Eigenschaften nachgebildet. Hierbei wird eine thermische Größe, nämlich das Thermische Motormodell (TMM), verwendet, um eine thermische Motormodellkurve in Abhängigkeit eines aktuellen Stroms zu erstellen. Das Thermische Motormodell TMM lässt sich wie folgt darstellen:

$$TMM = \left[1 - e^{-\frac{t}{\tau}}\right] \cdot \frac{I_{akt}}{I_{grenz}}$$

Dabei entspricht τ derjenigen Zeit aus der τ-Klassifikation, $I_{akt}$ dem aktuellen Stromwert, $I_{grenz}$ einem vorgegebenen Stromgrenzwert und t der Zeit. Das Auslösen eines Überlastgeräts erfolgt, wenn TMM = 1 = 100 % ist. Somit lässt sich unter Annahme von konstanten Strömen der jeweilige Auslösezeitpunkt berechnen, wenn die Maschine neu, d. h. bei TMM = 0, gestartet wird.

Da diese Berechnung in der Firmware wegen der Notwendigkeit einer exakten Zeitstempelung aufwändig ist, wird die Funktion über den folgenden rekursiven Zeitansatz nachgebildet:

$$TMM_{n+1} = TMM_n - \frac{TMM_n}{\frac{\tau}{\Delta t}} + \frac{I_{akt}}{\frac{\tau}{\Delta t}}$$

Die Funktionswerte werden im Zeitraster Δt berechnet und der jeweilige Wert $TMM_{n+1}$ wird gegenüber einer stromabhängigen Abschaltschwelle, einem vorgegebenen Wert, überwacht.

Mit dieser Implementierung ist es möglich, einen Auslösetrigger für die Überlastfunktion zu realisieren. Dabei wird ein Auslösen mittels eines Abschaltbefehls oder unmittelbarer Stromunterbrechung durchgeführt.

Eine Meldung/Warnung, ob eine Auslösung durch das Überlastgerät stattfinden wird, ist mit dieser Technologie ebenfalls möglich. Hierzu wird geprüft, ob der aktuelle Strom größer als ein vorgegebener Grenzstrom ist. Dabei bleibt unter Umständen eine große zeitliche, thermische Reserve des Motors unberücksichtigt. Eine Vorhersage, wann voraussichtlich ein Auslösen des Überlastgeräts stattfinden wird, wird bislang wie folgt erstellt: Eine SPS liest aus dem elektronischen Überlastgerät den aktuellen Wert des TMM sowie den aktuellen Strom aus, um dann mit gegebenen Konstanten eine Vorhersage zu treffen. Eine zwangsläufige Voraussetzung ist daher, dass das Überlastgerät kommunikationsfähig ist. Ein weiterer Nachteil bei der Erstellung des Vorhersage ist, dass der aktuelle Betriebszustand des Überlastrelais (CLASS, Unsymmetrie, aktueller Stromwert, aktueller Grenzwert,...) nachgebildet werden muss. Die Vorhersage ist deshalb mit sehr hohem Aufwand verbunden und daher nicht mehr in Echtzeit durchführbar. Als weiterer Nachteil stellt sich heraus, dass der Anwender die Modellfunktion im Anwenderprogramm seiner Steuerung nachbilden muss. Dazu ist entsprechendes Know-How notwendig und es kommt zu erheblichen Zyklusbelastungen.

Die EP 0 999 629 A1 offenbart eine Vorrichtung für den thermischen Überlastschutz eines elektrischen Motors. In dieser Vorrichtung werden die Zufuhrströme zu dem Motor erfasst, und es werden zugehörig zu bestimmten Zufuhrströmen Zeiten definiert, zu denen der Strom auszuschalten ist. In einem thermodynamischen Modell werden Zustandsgleichungen verwendet, deren Parameter in Abhängigkeit von diesen Zeiten bestimmt werden. Es wird berechnet, ob vorbestimmte Schwellwerte überschritten werden oder nicht.

Das US Patent 6,424,266 BI beschreibt ein Gerät zum Verhindern von thermischen Schäden an einem elektrischen Lasttransformator. Es wird der Eingangsstrom in den Lasttransformator erfasst, und es wird auf der Grundlage eines Vorhersagealgorithmus, welcher den Stromwert und den gegenwärtigen Wert der Umgebungstemperatur verwendet, eine Zeit berechnet, nach der ein Ausgangsalarmkontakt zu schließen ist.

Das US Patent 4,467,260 offenbart einen von einem Mikroprozessor gesteuerten Motorstarter. Unter anderem wird hierbei eine Kurve verwendet, in der die Temperatur eines Rotors exponentiell von der Zeit abhängt.

Die Aufgabe der vorliegenden Erfindung besteht darin, eine Vorrichtung und ein Verfahren zum Schutz elektrischer Maschinen vorzuschlagen mit denen eine Vorhersage einer zeitlichen Auslösereserve ohne großen Aufwand möglich ist.

Diese Aufgabe wird durch eine Schutzvorrichtung für eine elektrische Maschine gegen Stromüberlastung gemäß Patentanspruch 1 sowie ein Verfahren zum Schutz einer elektrischen Maschine gegen Stromüberlastung gemäß Patentanspruch 1 sowie ein Verfahren zum Schutz einer elektrischen Maschine gegen Stromüberlastung gemäß Patentanspruch 7 gelöst.

Erfindungsgemäß ist somit eine zeitliche Vorhersage zusammen mit einer Auswertung der dynamischen zeitlichen Auslösereserve einer elektronischen Überlastfunktion in einem Gerät mit Überlastfunktionalität realisierbar.

In der Vorhersageeinrichtung wird als aktuelle thermische Größe das Thermische Motormodell in Abhängigkeit von dem aktuellen Stromwert, von einem Stromgrenzwert und von einer für die elektrische Maschine charakteristischen Zeit berechnet, und das Thermische Motormodell wird als Grundlage für die Vorhersage verwendet. Vorzugsweise wird das Thermische Motormodell TMM in der Vorhersageeinrichtung rekursiv berechnet. Das aktuelle Thermische Motormodell wird zweckmäßigerweise dazu verwendet, um den Zeitwert für die Vorhersage dynamisch zu berechnen.

Vorteilhafterweise ist die Vorhersageeinrichtung und/oder die Verwertungseinrichtung parametrierbar. Damit können beliebige Grenzwerte und Geräteeigenschaften vorgegeben werden und in die Vorhersage beziehungsweise Verwertung eingehen.

In der Verwertungseinrichtung kann als Steuerungssignal ein Abschaltsignal oder Warnsignal erzeugt werden. Damit kann die Vorhersage dazu verwendet werden, dass ein gewünschter Steuerungszyklus mit überhöhtem Strom überhaupt nicht ermöglicht wird oder bei der Erstellung oder Verwendung des Steuerungszyklusses eine Warnung ausgegeben wird, dass der Steuerungszyklus nicht vollständig durchlaufen und ein vorzeitiger Abbruch erfolgen wird.

Erfindungsgemäß ist es daher möglich, dass die Berechnung der Vorhersage der zeitlichen Auslösereserve in einem Gerät mit Überlastfunktion integriert ist. Durch diese Integration ist es nicht mehr notwendig, dass das Gerät mit Überlastfunktion kommunikationsfähig ist.

In einer konkreten Ausführung kann die zeitliche Auslösereserve mittels Grenzwertwächter an einem Predictorgrenzwert überwacht werden. Die zeitliche Auslösereserve und/oder das Ergebnis des Grenzwertwächters kann ferner lokal verarbeitet oder zur Verarbeitung an die Steuerung (SPS) weitergegeben werden. Der Predictorgrenzwert und das anschließende Verhalten lassen sich, wie bereits angedeutet, gegebenenfalls parametrieren beziehungsweise einstellen.

In vorteilhafter Weise kann der Anwender die erfindungsgemäße Verbindung von Vorhersage und Auswertung zur Aufrechterhaltung seiner Prozesse nutzen. Darüber hinaus ist es erfindungsgemäß möglich, dass der Anwender die maximal zeitliche, thermische Reserve des Motors für seine Prozesse ausnutzt, ohne die Motorschutzfunktion zu verlieren oder seine Prozesse zu gefährden.

Ein weiterer Vorteil besteht darin, dass immer mit den aktuell gültigen Parametern/Konstanten/Betriebsumständen (CLASS, Ströme, Unsymmetrie bezüglich der Phasen) in Echtzeit gerechnet wird, da die Berechnung in dem Überlastgerät stattfindet. Dies bedeutet aber auch, dass die Vorhersage und Auswertung in nicht kommunikationsfähigen Geräten stattfinden kann, wobei die Verknüpfung von Vorhersage und Auswertung - wie bereits erwähnt - durch Parameter und Einstellelemente erfolgen kann.

Die vorliegende Erfindung wird nun anhand der beigefügten Zeichnungen näher erläutert, in denen zeigen:

FIG 1 ein Blockschaltdiagramm eines erfindungsgemäßen Motorschutzgeräts;

FIG 2 ein Stromverlaufsdiagramm; und

FIG 3 ein Diagramm der thermischen Größe TMM infolge des Stromverlaufs von FIG 2.

Die nachfolgend näher beschriebenen Ausführungsbeispiele stellen bevorzugte Ausführungsformen der vorliegenden Erfindung dar.

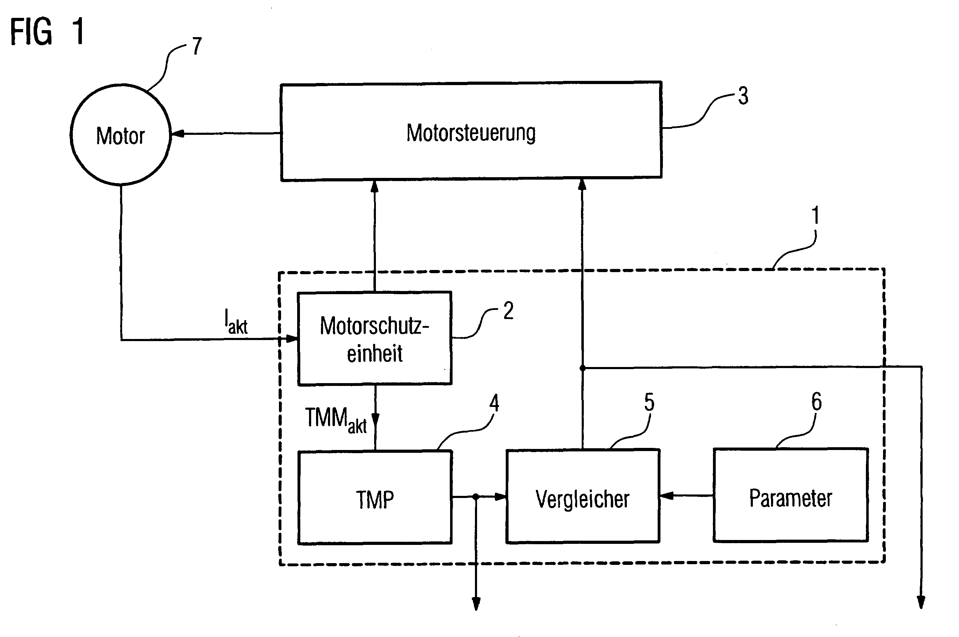

In FIG 1 ist mit gestrichelter Linie ein Motorschutzgerät 1 dargestellt. Dieses besitzt eine Motorschutzeinheit 2 zur Stromerfassung, Strombereitstellung und TMM-Bildung für den Motorschutz, das einen aktuellen Stromwert $I_{akt}$ von einem Motor 7 erhält. Für den Fall der Überhitzung gibt das Überlastgerät 2 einen entsprechenden Befehl an die Motorsteuerung 3 beziehungsweise unterbricht unmittelbar die Stromzufuhr zum angesteuerten Motor.

Die Motorschutzeinheit 2 liefert einen aktuellen thermischen Wert $TMM_{akt}$ an eine Vorhersageeinheit (TMP) 4, die ebenfalls in das Motorschutzgerät 1 integriert ist. Die Vorhersageeinheit 4 bildet aus dem thermischen Wert $TMM_{akt}$ einen zeitlichen Vorhersagewert, nämlich eine zeitliche Auslösereserve, und liefert ihn an einen an die Vorhersageeinheit 4 angeschlossenen und ebenfalls in das Motorschutzgerät 1 integrierten Vergleicher 5.

Der Vergleicher 5 ist über eine Parametriereinheit 6, die ebenfalls in das Motorschutzgerät 1 integriert ist, parametrierbar. Über die Parametriereinheit 6 können gegebenenfalls auch die Motorschutzeinheit 2 und die Vorhersageeinheit 4 parametriert werden. Entsprechende Verbindungen sind in FIG 1 der Übersicht halber nicht eingezeichnet.

Im Vergleicher 5 wird festgestellt, ob die zeitliche Auslösereserve größer oder kleiner als ein parametrierter Grenzwert (Predictorgrenzwert)ist. Ist die Auslösereserve kleiner als der parametrierte Grenzwert (Predictorgrenzwert), so wird an die Motorsteuerung 3 ein Warn- oder Steuersignal abgegeben, so dass der Anwender entweder gewarnt wird, dass bei der gewünschten Ansteuerung voraussichtlich ein automatisches Abschalten zu erwarten ist, oder ein Ansteuern des Motors mit der gewünschten Ansteuerkurve nicht zugelassen wird.

Die Motorsteuerung 3 kann auch in das Motorschutzgerät 1 integriert sein.

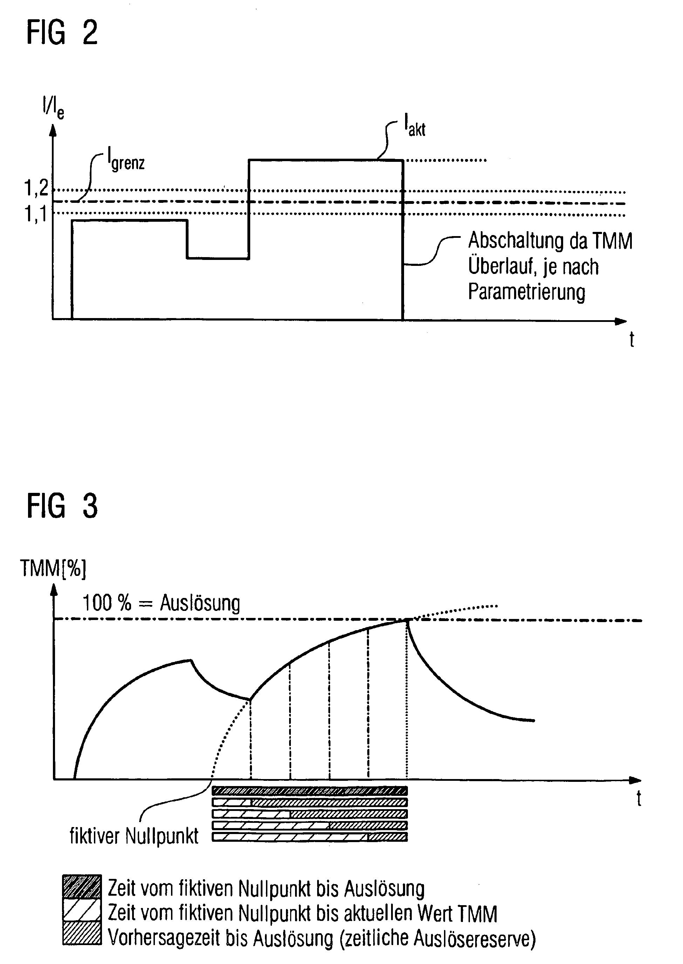

In dem in FIG 2 gewählten Beispiel wird der Motor zunächst mit einem Strom betrieben, der unterhalb eines normierten Grenzstromtors liegt. Dieses Grenzstromtor ist definiert als 1,1...1,2 x $I_e$. Dabei entspricht $I_e$ dem Einstell- beziehungsweise Nennstrom, mit dem der Motor dauerhaft betrieben werden kann. Nach einer gewissen Zeit sinkt (z. B. durch Lastveränderung) der Strom $I_{akt}$ und steigt dann über das Grenzstromtor, in dem ein zu definierender Grenzstrom $I_{grenz}$ liegt, an. Dieser hohe Strom würde dazu führen, dass der Motor langfristig überhitzt wird.

In FIG 3 ist die dem Stromverlauf gemäß FIG 2 zeitlich entsprechende thermische Größe TMM aufgetragen. Der Kurvenverlauf in den stetigen Abschnitten ist durch die in der Beschreibungseinleitung beschriebene Exponentialfunktion gegeben. Dementsprechend steigt die Temperatur des Motors nach dem Einschalten des Motors gemäß der genannten Exponentialfunktion an und würde aber nicht eine bestimmte Auslöseschwelle, hier 100 %, erreichen, da sich der Strom unterhalb des Grenzstroms (vergleiche FIG 2) befindet. Bei der anschließenden Reduzierung des Stroms sinkt auch die Temperatur wieder ab. Wird dann der Strom auf einen Wert oberhalb des Grenzstroms $I_{grenz}$ erhöht, so steigt die Temperatur stetig an und erreicht die Auslöseschwelle TMM = 100 %. An diesem Punkt wird der Strom zum Motor abgeschaltet (vergleich FIG 2), so dass auch die Temperatur des Motors wieder allmählich absinkt (vergleiche FIG 3).

Für die Ansteuerung des Motors beziehungsweise die Festlegung von Stromansteuerprofilen ist es notwendig, die zeitliche Auslösereserve, bei der TMM den Schwellwert 100 % erreicht, zu kennen. Es soll damit eine Vorhersage der zeitlichen Auslösereserve zu beliebigen Zeitpunkten in Echtzeit erfolgen können. Dabei soll nicht nur von dem statischen Fall ausgegangen werden, dass der Motor dauerhaft mit konstantem Strom angesteuert wird, sondern auch die dynamische Variante betrachtet werden können, wenn sich der Strom im Laufe der Ansteuerung ändert.

Eine Berechnungsmöglichkeit zur Bestimmung der Auslösereserve basiert beispielsweise darauf, dass man sich einen fiktiven Nullpunkt der e-Funktion errechnet. Dieser Nullpunkt definiert den Zeitpunkt, an dem unter Berücksichtigung des aktuellen TMM und des aktuellen Stroms $I_{akt}$ TMM = 0 ist. In der Kenntnis des Grenzstroms $I_{grenz}$, der τ-Klasse und der Unsymmetrieinformation bezüglich der Phasen, die aktuell vorliegen, kann eine dynamische Vorhersage der Zeit bis zur Auslösung, d. h. dem Abschalten des Motors, gemacht werden. Auf der Basis des fiktiven Nullpunkts kann zu jedem Zeitpunkt eine aktuelle zeitliche Vorhersage getroffen werden, wie dies in FIG 3 unten durch horizontale Balken angezeigt ist. Dabei kann bei jeder Aktualisierung der aktuelle TMM-Wert sowie der aktuelle Strom berücksichtigt werden.

Erfindungsgemäß wird nun die zeitliche Vorhersage der Auslösereserve mit einer Anwenderfunktion verknüpft. Beispielsweise kann so die dynamische zeitliche Vorhersage der Auslösereserve einer elektronischen Überlastfunktion mit einer Überlastmeldung beziehungsweise -warnung verknüpft werden. Der Anwender kann, wie bereits erwähnt, vor der Benutzung eines Ansteuerprofils, das aller Voraussicht nach zu einem automatischen Abschalten des Motors führen wird, gewarnt werden. Dieses ungewollte Abschalten kann bei gewissen Prozessen sehr nachteilige Folgen haben.

Die einzelnen Parameter zur Bestimmung der Auslösereserve können dabei durch die Parametriereinheit 6 (vergleiche FIG 1) mit entsprechender Eingabeschnittstelle eingegeben werden. Ferner kann ein entsprechend erhaltener, gegebenenfalls normierter Vorhersagewert der zeitlichen Auslösereserve zur Weiterverarbeitung einer speicherprogrammierbaren Steuerung (SPS) oder einem sonstigen System zur Verfügung gestellt werden.

Nachfolgend sei ein konkretes Ausführungsbeispiel der vorliegenden Erfindung beschrieben. Demnach ist beispielsweise ein Lüftermotor zwingend zur Kühlung eines Produktionsprozesses notwendig. Ein Lüfterausfall würde zu einem Schaden an einer Veredelung und somit zum Ausschuss führen. Nach bisherigem Stand der Technik gibt es vor Beginn des Veredelungsprozesses keine Aussage, ob die Kühlung über die Dauer des Veredelungsprozesses aufrechterhalten werden kann. Erfindungsgemäß parametriert nun der Anwender die maximale Prozesslaufzeit als Predictorgrenzwert. Durch entsprechende Parametereinstellung wird eine Unterschreitung der notwendigen Kühlzeit als Prozessstörung definiert. Vor Einfahrt des Rohteils in den Veredelungsprozess wird anhand des Thermal Memory Predictor TMP und dessen Grenzwertwächter geprüft, ob die zeitliche thermische Reserve für das Durchlaufen des Veredelungsprozesses gegeben ist. Auf diese Weise lässt sich der Motor und somit der Gesamtprozess gezielter nutzen. Insbesondere können kritische Prozessabschnitte besser abgesichert werden.

**Patentansprüche**

1. Schutzvorrichtung für eine elektrische Maschine gegen Stromüberlastung, mit:

   - einer Stromwertbereitstellungseinrichtung zum Bereitstellen eines aktuellen Stromwerts, mit dem die elektrische Maschine betrieben wird,
   - einer Vorhersageeinrichtung (2, 4) zum Ermitteln des Thermischen Motormodells TMM in Abhängigkeit von dem aktuellen Stromwert, einem vorgegebenen Stromgrenzwert, und einer Zeit, welche durch die Klassifikation der elektrischen Maschine vorgegeben ist, und zum Vorhersagen eines absoluten oder relativen Zeitwerts für eine Auslösereserve, bei dem das Thermische Motormodell einen Wert von Eins erreicht, und
- einer Verwertungseinrichtung (5) zum Verwerten des Zeitwerts für die Auslösereserve zur Erzeugung eines Steuerungssignals.

2. Schutzvorrichtung nach Anspruch 1, wobei bei Bereitstellung eines Stromes $I_{akt}$ ab dem Zeitpunkt $t=0$ TMM gegeben ist durch:

$$TMM = \left[1 - e^{-\frac{t}{\tau}}\right] \cdot \frac{I_{akt}}{I_{grenz}} \,,$$

wobei $I_{grenz}$ der Stromgrenzwert und t die vorgegebene Zeit ist.

3. Schutzvorrichtung nach Anspruch 1, wobei das Thermische Motormodell in der Vorhersageeinrichtung (2, 4) rekursiv berechenbar ist.

4. Schutzvorrichtung nach Anspruch 1 oder 3, wobei der Zeitwert mit dem aktuellen Wert des Thermischen Motormodells dynamisch berechenbar ist.

5. Schutzvorrichtung nach einem der vorhergehenden Ansprüche, wobei die Vorhersageeinrichtung (2, 4) und/oder die Verwertungseinrichtung (5) parametrierbar ist.

6. Schutzvorrichtung nach einem der vorhergehenden Ansprüche, wobei in der Verwertungseinrichtung (5) als Steuerungssignal ein Abschaltsignal oder Warnsignal erzeugbar ist.

7. Verfahren zum Schutz einer elektrischen Maschine gegen Stromüberlastung mit den Schritten:

- Bereitstellen eines aktuellen Stromwerts, mit dem die elektrische Maschine betrieben wird,
- Ermitteln des Thermischen Motormodells auf der Grundlage des aktuellen Stromwerts, eines vorgegebenen Stromgrenzwerts und einer durch die Klassifizierung der elektrischen Maschine vorgegebenen Zeit, und
- Vorhersagen eines absoluten oder relativen Zeitwerts für eine zeitliche Auslösereserve in Abhängigkeit von dem Thermischen Motormodell, bei dem das Thermische Motormodell einen Wert von Eins erreicht,
- Erzeugen eines Steuerungssignals unter Verwendung des Zeitwerts, und
- Ansteuern der elektrischen Maschine mit dem Steuerungssignal.

8. Verfahren nach Anspruch 7, wobei bei Bereitstellen des aktuellen Stromwerts $I_{akt}$ ab dem Zeitpunkt $t=0$ das Thermische Motormodell gegeben ist durch:

$$TMM = \left[1 - e^{-\frac{t}{\tau}}\right] \cdot \frac{I_{akt}}{I_{grenz}} \,,$$

wobei $I_{grenz}$ der Stromgrenzwert und $t$ die vorgegebene Zeit ist.

9. Verfahren nach Anspruch 7, bei dem das Thermische Motormodell rekursiv berechnet wird.

10. Verfahren nach Anspruch 7 oder 9, bei dem der Zeitwert mit dem aktuellen Thermischen Motormodell dynamisch berechnet wird.

11. Verfahren nach einem der Ansprüche 7 bis 10, bei dem der Prozess des Erzeugens eines Steuerungssignals individuell parametriert wird.

12. Verfahren nach einem der Ansprüche 7 bis 11, wobei als Steuerungssignal ein Abschaltsignal oder Warnsignal erzeugt wird.

**Claims**

1. Protective apparatus for protecting an electric machine against current overload, having:

- a current value provision device for the purpose of providing a present current value with which the electric machine is operated,
- a prediction device (2, 4) for the purpose of determining the thermal motor model *TMM* as a function of the present current value, a predetermined current limit value, and a time, which is predetermined by the classification of the electric machine, and for the purpose of predicting an absolute or relative time value for a trigger reserve, in the case of which the thermal motor model reaches a value of one, and
- a utilization device (5) for the purpose of utilizing the time value for the trigger reserve for generating a control signal.

2. Protective apparatus according to Claim 1, in which, when providing a current $I_{pres}$ from the point in time $t = 0$ on, TMM is given by:

$$TMM = \left[1 - e^{\frac{1}{\tau}}\right] \cdot \frac{I_{pres}}{I_{limit}},$$

where $I_{limit}$ is the current limit value, and *t* is the predetermined time.

3. Protective apparatus according to Claim 1, it being possible for the thermal motor model to be calculated recursively in the prediction device (2, 4).

4. Protective apparatus according to Claim 1 or 3, it being possible for the time value to be calculated dynamically using the present value for the thermal motor model.

5. Protective apparatus according to one of the preceding claims, it being possible for the prediction device (2, 4) and/or the utilization device (5) to be parameterized.

6. Protective apparatus according to one of the preceding claims, it being possible for a disconnection signal or warning signal to be generated as a control signal in the utilization device (5).

7. Method for protecting an electric machine against current overload having the following steps:

   - provision of a present current value with which the electric machine is operated,
   - determination of the thermal motor model on the basis of the present current value, a predetermined current limit value and a time predetermined by the classification of the electric machine, and
   - prediction of an absolute or relative time value for a temporal trigger reserve as a function of the thermal motor model in which the thermal motor model reaches a value of one,
   - generation of a control signal using the time value, and
   - driving of the electric machine using the control signal.

8. Method according to Claim 7, in which, when providing the present current value $I_{pres}$ from the point in time *t = 0* on, the thermal motor model is given by:

$$TMM = \left[1 - e^{\frac{1}{\tau}}\right] \cdot \frac{I_{pres}}{I_{limit}},$$

where $I_{limit}$ is the current limit value and *t* is the predetermined time.

9. Method according to Claim 7, in which the thermal motor model is calculated recursively.

10. Method according to Claim 7 or 9, in which the time value is calculated dynamically using the present thermal motor model.

11. Method according to one of Claims 7 to 10, in which the process for generating a control signal is parameterized individually.

12. Method according to one of Claims 7 to 11, a disconnection signal or warning signal being generated as a control signal.

**Revendications**

1. Dispositif de protection pour une machine électrique contre une surcharge de courant, avec:

   - un dispositif de fourniture de valeur de courant pour fournir une valeur de courant actuelle avec laquelle la machine électrique est exploitée,
   - un dispositif de prévision (2, 4) pour déterminer le modèle thermique de moteur TMM en fonction de la valeur de courant actuelle, d'une valeur limite de courant prescrite et d'un temps qui est prescrit par la classification de la machine électrique et pour prévoir une valeur de temps absolue ou relative pour une réserve de déclenchement, valeur pour laquelle le modèle thermique de moteur atteint une valeur de un, et
   - un dispositif d'évaluation (5) pour évaluer la valeur de temps pour la réserve de déclenchement en vue de la production d'un signal de commande.

2. Dispositif de protection selon la revendication 1, tel que, lors de la fourniture d'un courant $I_{akt}$ à partir de l'instant t = 0, le modèle thermique de moteur TMM est donné par:

$$TMM = \left[1 - e^{\frac{t}{r}}\right] \cdot \frac{I_{akt}}{I_{grenz}},$$

$I_{grenz}$ étant la valeur limite de courant et t le temps prescrit.

3. Dispositif de protection selon la revendication 1, tel que le modèle thermique de moteur est calculable de façon récursive dans le dispositif de prévision (2, 4).

**4.** Dispositif de protection selon la revendication 1 ou 3, tel que la valeur de temps est calculable de façon dynamique avec la valeur actuelle du modèle thermique de moteur.

**5.** Dispositif de protection selon l'une des revendications précédentes, tel que le dispositif de prévision (2, 4) et/ou le dispositif d'évaluation (5) sont paramétrables.

**6.** Dispositif de protection selon l'une des revendications précédentes, tel qu'un signal de coupure ou signal d'avertissement peut être produit comme signal de commande dans le dispositif d'évaluation (5).

**7.** Procédé pour protéger une machine électrique contre une surcharge de courant, comprenant les étapes suivantes :

- fourniture d'une valeur de courant actuelle avec laquelle la machine électrique est exploitée,
- détermination du modèle thermique de moteur en fonction de la valeur de courant actuelle, d'une valeur limite de courant prescrite et d'un temps prescrit par la classification de la machine électrique, et
- prévision d'une valeur de temps absolue ou relative pour une réserve de déclenchement temporelle en fonction du modèle thermique de moteur, valeur pour laquelle le modèle thermique de moteur atteint une valeur de un,
- production d'un signal de commande en utilisant la valeur de temps, et
- commande de la machine électrique avec le signal de commande.

**8.** Procédé selon la revendication 7, dans lequel, lors de la fourniture de la valeur de courant actuelle $I_{akt}$ à partir de l'instant t = 0, le modèle thermique de moteur TMM est donné par :

$$TMM = [1 - e^{\frac{t}{r}}] \cdot \frac{I_{akt}}{I_{grenz}},$$

$I_{grenz}$ étant la valeur limite de courant et t le temps prescrit.

**9.** Procédé selon la revendication 7, dans lequel on calcule le modèle thermique de moteur de façon récursive.

**10.** Procédé selon la revendication 7 ou 9, dans lequel on calcule la valeur de temps de façon dynamique avec la valeur actuelle du modèle thermique de moteur.

**11.** Procédé selon l'une des revendications 7 à 10, dans lequel on paramètre individuellement le processus de la production d'un signal de commande.

**12.** Procédé selon l'une des revendications 7 à 11, dans lequel on produit comme signal de commande un signal de coupure ou signal d'avertissement.

# FIG 1

Motor (7)

Motorsteuerung (3)

$I_{akt}$

Motorschutz-einheit (2)

$TMM_{akt}$

TMP (4)

Vergleicher (5)

Parameter (6)

1

EP 1 645 020 B1

FIG 2

$I/I_e$

$I_{grenz}$

$I_{akt}$

1,2

1,1

Abschaltung da TMM
Überlauf, je nach
Parametrierung

t

FIG 3

TMM[%]

100 % = Auslösung

fiktiver Nullpunkt

t

Zeit vom fiktiven Nullpunkt bis Auslösung
Zeit vom fiktiven Nullpunkt bis aktuellen Wert TMM
Vorhersagezeit bis Auslösung (zeitliche Auslösereserve)